# EUROPÄISCHE PATENTSCHRIFT

(11) **EP 2 833 992 B1**
(45) Veröffentlichungstag und Bekanntmachung des Hinweises auf die Patenterteilung: **13.01.2016**
(21) Anmeldenummer: 13711875.8
(22) Anmeldetag: 20.03.2013
(51) Int. Cl.: B01F 7/00, B01F 7/06, C02F 3/12

(54) **HORIZONTALRÜHRWERK**
HORIZONTAL AGITATOR
AGITATEUR HORIZONTAL

(30) Priorität: 04.04.2012 DE 102012205579
(43) Veröffentlichungstag der Anmeldung: 11.02.2015
(73) Patentinhaber: INVENT Umwelt- und Verfahrenstechnik AG, 91058 Erlangen (DE)
(72) Erfinder: HÖFKEN, Marcus, 91054 Erlangen (DE); HAGSPIEL, Thomas, 92353 Postbauer-Heng (DE)
(74) Vertreter: Gassner, Wolfgang
(86) Internationale Anmeldenummer: PCT/EP2013/055838
(87) Internationale Veröffentlichungsnummer: WO 2013/149834

(56) Entgegenhaltungen:
- EP-A1- 0 757 182
- DE-A1- 10 319 760
- DE-A1- 19 845 545
- JP-A- 2008 087 862

## Beschreibung

Die Erfindung betrifft ein Horizontalrührwerk nach dem Oberbegriff des Patentanspruchs 1. Sie betrifft ferner ein Verfahren zum Absenken einer einen Tauchmotor mit einem damit antriebsmäßig verbundenen Propeller umfassenden Montageeinheit.

Ein gattungsgemäßes Horizontalrührwerk ist beispielsweise aus der US 4,671,872 bekannt. Ein Tauchmotor bildet zusammen mit einem Propeller eine Montageeinheit. Die Montageeinheit ist vertikal verschiebbar an einem Pfosten geführt, der auf einem Boden eines Klärbeckens abgestützt und an einer Wand des Klärbeckens befestigt ist. Zum Anheben und Absenken der Montageeinheit ist eine Seilwinde vorgesehen. Mit dem bekannten Horizontalrührwerk wird eine vom Tauchmotor in Richtung des Propellers gerichtete Strömung erzeugt. Die Erzeugung einer solchen Horizontalströmung ist nicht besonders effizient, weil die im Ansaugbereich des Propellers befindliche Wand einer effizienten horizontalen Umwälzung von im Klärbecken aufgenommenem Wasser entgegenwirkt.

Zur Behebung dieses Nachteils ist aus der WO 2008/101632 A1 ein ebenfalls an einem Pfosten angebrachtes Horizontalrührwerk bekannt. Das Horizontalrührwerk ist so ausgestaltet, dass damit eine vom Propeller zum Tauchmotor gerichtete Strömung erzeugt wird. In diesem Fall behindert also weder die Wand des Klärbeckens noch der Pfosten ein Ansaugen von Abwasser mittels des Propellers. Mit dem bekannten Horizontalrührwerk kann mit verbesserter Effizienz eine horizontale Umwälzung von Abwasser im Klärbecken bewirkt werden.

Das Dokument DE-A-103 19760 offenbart ein Horizontalrührwerk nach dem Oberbegriff des Anspruchs 1.

Aufgabe der Erfindung ist es, ein Horizontalrührwerk mit weiter verbesserter Effizienz anzugeben. Nach einem weiteren Ziel der Erfindung soll das Horizontalrührwerk möglichst einfach und kostengünstig herstellbar sein. Ferner soll weiterhin ein Herausheben einer aus einem Tauchmotor und einem daran angebrachten Propeller gebildeten Montageeinheit aus dem Klärbecken zu Reparatur- und/oder Wartungszwecken möglich sein.

Diese Aufgabe wird durch die Merkmale der Anspruchs 1 gelöst. Zweckmäßige Ausgestaltungen der Erfindung ergeben sich aus den Merkmalen der Ansprüche 2 bis 12.

Erfindungsgemäß wird vorgeschlagen, dass die Führung durch zumindest ein zwischen der Auftauch-Position und der Aufnahme verlaufendes gespanntes erstes Seil gebildet ist. Infolgedessen kann der nach dem Stand der Technik zum Führen der Montageeinheit vorgesehene Pfosten entfallen. Damit entfällt auch ein durch den Pfosten bedingter Strömungswiderstand. Das erfindungsgemäße Horizontalrührwerk zeichnet sich durch eine besonders effiziente horizontale Umwälzung von Abwasser in einem Klärbecken aus.

Nach einer ersten Ausgestaltung ist das erste Seil um eine an der Aufnahme vorgesehene erste Umlenkeinrichtung geführt und ein erstes Ende des ersten Seils ist an der Montageeinheit befestigt. Zweckmäßigerweise umgreift eine an der Montageeinheit vorgesehene Führung das erste Seil. Damit ist es möglich, die Montageeinheit entlang des ersten Seils in eine Montageposition an der Aufnahme zu führen.

Vorteilhafterweise ist zum Bewegen der Montageeinheit entlang des ersten Seils ein zweites Seil vorgesehen, dessen zweites Ende an der Montageeinheit befestigt ist. Das zweite Seil ermöglicht ein Anheben und/oder Absenken der Montageeinheit, wobei diese vorteilhafterweise entlang des ersten Seils mittels der an der Montageeinheit vorgesehenen Führung geführt wird.

Nach einer weiteren Ausgestaltung sind das erste Ende des ersten Seils an einem unteren Befestigungspunkt an der Montageeinheit und das zweite Ende des zweiten Seils an zumindest einem oberen Befestigungspunkt der Montageeinheit befestigt. Der obere Befestigungspunkt ist vorteilhafterweise versetzt zu einem Schwerpunkt der Montageeinheit angeordnet, so dass die am zumindest einen oberen Befestigungspunkt hängende Montageeinheit eine Schräglage einnimmt, bei welcher eine Achse des Propellers schräg bezüglich des Bodens des Klärbeckens verläuft. Durch die im hängenden Zustand vorgeschlagene Schräglage ist es besonders einfach möglich, die Montageeinheit an die Aufnahme anzukuppeln.

Zweckmäßigerweise ist das zweite Ende des zweiten Seils lösbar am oberen Befestigungspunkt der Montageeinheit befestigt. Zu diesem Zweck kann am zweiten Ende des zweiten Seils beispielsweise ein Haken und am oberen Befestigungspunkt der Montageeinheit eine dazu korrespondierende Öse oder ein Bügel oder dgl. angebracht sein. Damit ist es möglich, nach dem Absenken der Montageeinheit auf die Aufnahme das zweite Seil von der Montageeinheit zu lösen und aus dem Klärbecken herauszuziehen. Infolgedessen kann ein durch das zweite Seil bedingter Strömungswiderstand vermieden und die Effizienz der durch das Horizontalrührwerk bedingten Umwälzung des im Klärbecken aufgenommenen Abwassers verbessert werden.

Zum Einhängen eines am zweiten Ende des zweiten Seils beispielsweise angebrachten Hakens kann eine Stange oder dgl. vorgesehen sein, an welcher der Haken, z. B. lösbar, befestigt ist und mit welcher der Haken in die an der Montageeinheit vorgesehene Öse oder den daran vorgesehenen Bügel eingehängt werden kann.

Nach einer weiteren Ausgestaltung ist ein drittes Ende des ersten Seils auf einer oberhalb des maximalen Nenn-Abwasserniveaus vorgesehenen ersten Winde und ein viertes Ende des zweiten Seils auf einer oberhalb des maximalen Nenn-Abwasserniveaus vorgesehenen zweiten Winde aufgenommen. Mittels der Winden, welche zweckmäßigerweise unter Zwischenschaltung eines Umkehrgetriebes miteinander gekoppelt sein können, kann die Montageeinheit angehoben und abgesenkt werden. Die Winden können beispielsweise mittels eines Elektromotors angetrieben werden.

Nach einer besonders vorteilhaften Ausgestaltung sind das erste und das zweite Seil zu einem umlaufenden Seil zusammengefasst, welches oberhalb der Auftauch-Position um eine zweite Umlenkeinrichtung, vorzugsweise eine dritte Winde, geführt ist. Die dritte Winde kann beispielsweise mit einem Elektromotor angetrieben werden.

Die erste und die zweite Winde oder die zweite Umlenkeinrichtung sind zweckmäßigerweise an einer im Bereich der Auftauch-Position vorgesehenen Brücke oder Gestell befestigt. Damit kann die Länge des Seils oder der Seile gering gehalten werden. Das vereinfacht den Bewegungsablauf und macht das vorgeschlagene Horizontalrührwerk besonders zuverlässig.

Nach einer weiteren Ausgestaltung weist die Montageeinheit eine erste Kupplungseinrichtung auf, wobei die Aufnahme mit einer zur ersten Kupplungseinrichtung korrespondierenden zweiten Kupplungseinrichtung versehen ist, so dass die Montageeinheit durch Zusammenwirken der ersten und der zweiten Kupplungseinrichtung lösbar an die Aufnahme ankuppelbar ist. Die erste und die zweite Kupplungseinrichtung sind zweckmäßigerweise so ausgestaltet, dass ein Ein- oder Auskuppeln durch einen Zug am ersten oder zweiten Seil oder, im Falle der Verwendung eines umlaufenden Seils, durch Zug an einem ersten oder zweiten Trum des umlaufenden Seils möglich ist. Mit der Kupplungseinrichtung wird vorzugsweise eine formschlüssige Verbindung zwischen der Aufnahme und der Montageeinheit hergestellt. Die formschlüssige Verbindung kann durch eine durch den Betrieb des Horizontalrührwerks bedingte kraftschlüssige Verbindung ergänzt und gesichert werden.

Die erste Kupplungseinrichtung kann ein erstes Kuppelelement aufweisen, welches beim Einkuppeln in ein an der Aufnahme vorgesehenes zweites Kuppelelement der zweiten Kupplungseinrichtung eingreift. Die ersten und die zweiten Kuppelelemente können insbesondere so ausgestaltet sein, dass die schräg gestellte Montageeinheit beim Absenken auf die Aufnahme ineinandergreift.

Nach einer weiteren Ausgestaltung weist die erste Kupplungseinrichtung ein drittes Kuppelelement auf, welches beim Einkuppeln in ein an der Aufnahme vorgesehenes viertes Kuppelelement der zweiten Kupplungseinrichtung eingreift, wobei eine Klemm- oder Rastverbindung erreicht wird.

Nachfolgend wird ein Ausführungsbeispiel der Erfindung anhand der Zeichnungen näher erläutert. Es zeigen:
- Fig. 1: eine perspektivische Ansicht eines Horizontalrührwerks,
- Fig. 2: eine Schnittansicht gemäß Fig. 1,
- Fig. 3: eine Seitenansicht gemäß Fig. 1,
- Fig. 4: eine Draufsicht gemäß Fig. 1,
- Fig. 5: das Horizontalrührwerk gemäß Fig. 2 mit Seilzug,
- Fig. 6a - d: den Bewegungsablauf beim Einkuppeln der Montageeinheit und
- Fig. 7: eine Schnittansicht durch ein weiteres Horizontalrührwerk.

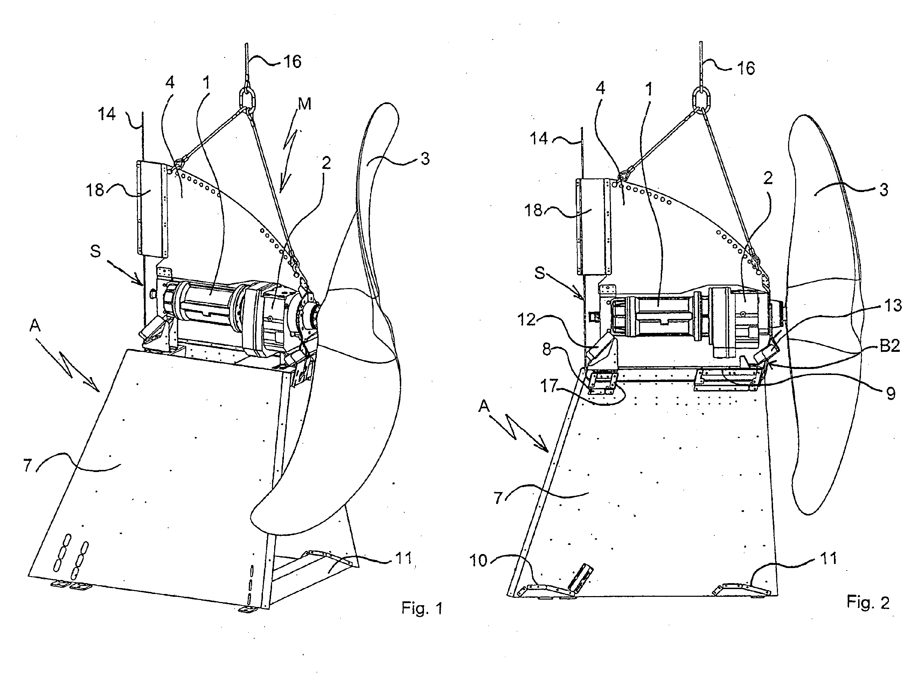

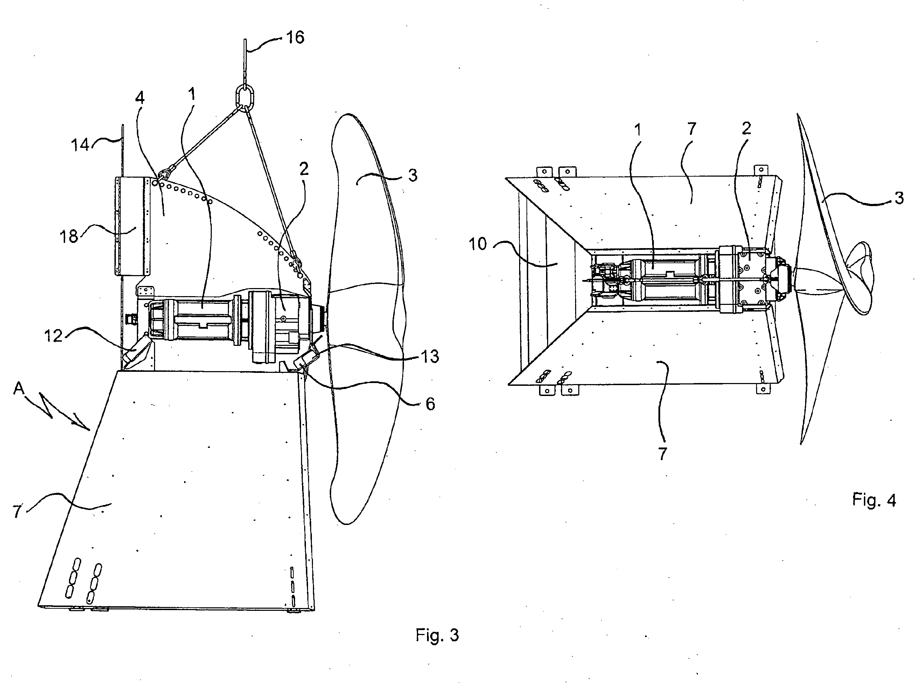

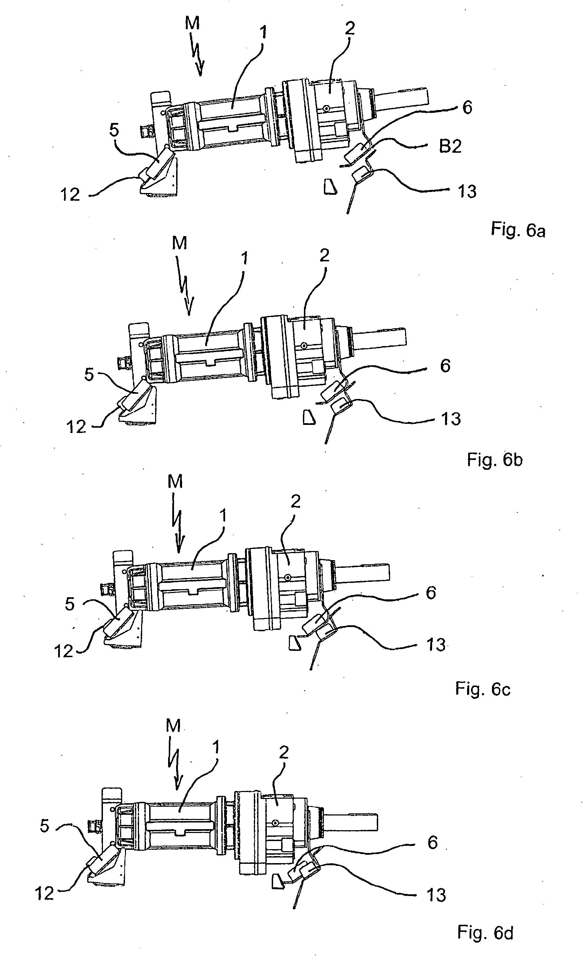

Das in Fig. 1 bis 5 gezeigte Horizontalrührwerk weist eine allgemein mit dem Bezugszeichen M bezeichnete Montageeinheit auf. Die Montageeinheit M umfasst einen Tauchmotor 1, der über ein Getriebe 2 einen Propeller 3 derart antreibt, dass eine vom Propeller 3 in Richtung des Tauchmotors 1 gerichtete Horizontalströmung erzeugbar ist. Vom Tauchmotor 1 erstreckt sich in vertikaler Richtung ein erstes Strömungsleitelement 4. Wie insbesondere aus Fig. 6a hervorgeht, weist die Montageeinheit M eine erste Kupplungseinrichtung auf. Die erste Kupplungseinrichtung umfasst ein sich im Tauchmotor 1 erstreckendes erstes Kuppelelement 5 sowie ein vom Getriebe 2 sich erstreckendes drittes Kuppelelement 6.

In den Fig. 1 bis 5 ist mit dem Bezugszeichen A eine Aufnahme bezeichnet, bei der zwei plattenartige zweite Strömungsleitelemente 7 mittels einer ersten Trägerplatte 8 und einer zweiten Trägerplatte 9 miteinander verbunden sind. Bodenseitig sind die zweiten Strömungsleitelemente 7 mit einem ersten Verbindungselement 10 und einem zweiten Verbindungselement 11 miteinander verbunden. Die erste 8 und die zweite Trägerplatte 9 tragen eine zweite Kupplungseinrichtung. Die zweite Kupplungseinrichtung umfasst ein von der ersten Trägerplatte sich erstreckendes zweites Kuppelelement 12 und ein sich von der zweiten Trägerplatte erstreckendes viertes Kuppelelement 13. Mit dem Bezugszeichen 14 ist ein erstes Trum eines umlaufenden Seils S bezeichnet, welches sich zwischen einer ersten Umlenkrolle 15 und der Aufnahme A erstreckt. Ein zweites Trum 16 erstreckt sich von der ersten Umlenkrolle 15 bis zu den oberen Befestigungspunkten B1 an der Montageeinheit M. Die oberen Befestigungspunkte B1 befinden sich vorteilhafterweise am ersten Strömungsleitelement 4. Das erste Trum 14 des Seils S ist durch eine erste Führung 17 an der Aufnahme A geführt, welche die erste 8 und die zweite Trägerplatte 9 durchgreift. Ein weiteres Ende des Seils S ist an einem unteren Befestigungspunkt B2 an der Montageeinheit M im Bereich des dritten Kuppelelements 6 befestigt. Die Montageeinheit M ist mittels einer am ersten Strömungsleitelement angebrachten zweiten Führung 18 entlang des ersten Trums 14 geführt. Bei der zweiten Führung 18 kann es sich um eine das erste Trum 14 umgreifende Schlitzführung, Augbolzen oder dgl. handeln: Bei Verwendung der in den Figuren gezeigten Schlitzführung ist ein Verschwenken der Montageeinheit M von einer horizontalen Position (siehe Fig. 6a) in eine Schräglage (siehe Fig. 6d) möglich. Bei der ersten Führung 17 handelt es sich zweckmäßigerweise um ein die erste 8 und die zweite Trägerplatte 9 durchgreifendes gebogenes Rohr (hier nicht gezeigt). Alternativ dazu können auch zweite Umlenkrollen (hier nicht gezeigt) vorgesehen sein.

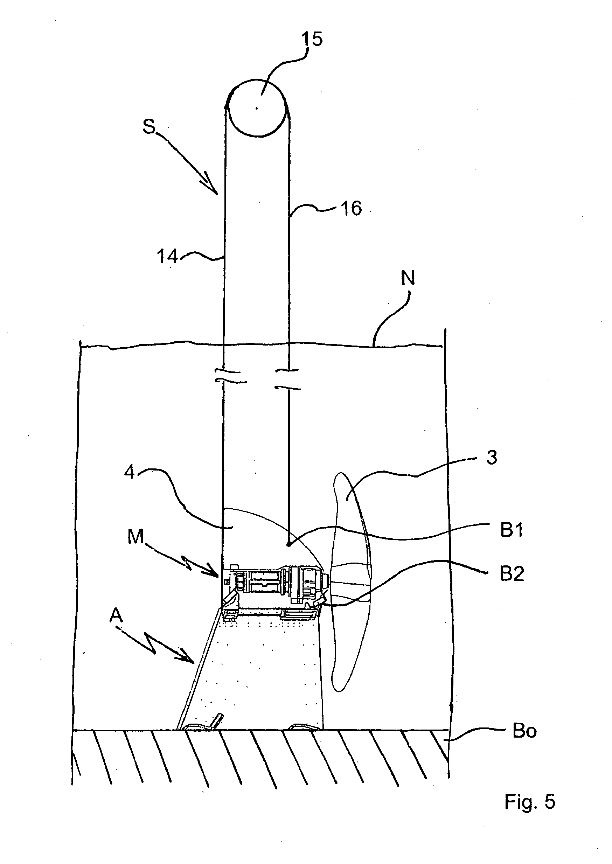

Die erste Umlenkrolle 15 ist oberhalb eines Nenn-Abwasserniveaus an einer Brücke oder einem Gestell (hier nicht gezeigt) montiert. Sie kann beispielsweise mittels eines Elektromotors angetrieben werden. Ein Boden eines Klärbeckens ist in Fig. 5 mit dem Bezugszeichen Bo bezeichnet.

Die Funktion des Horizontalrührwerks ist Folgende:

Zum Absenken einer oberhalb des Nenn-Abwasserniveaus N befindlichen Montageeinheit M wird das umlaufende Seil S im Uhrzeigersinn um die erste Umlenkrolle 15 bewegt. Infolgedessen senkt sich die Montageeinheit M in Richtung der Aufnahme A ab, wobei sie entlang des ersten Trums 14 mittels der zweiten Führung 18 geführt wird. Eine weitere Führung wird durch das zweite Trum 16 bewirkt.

Ein oberer Befestigungspunkt B1 an der Montageeinheit M ist so gewählt, dass die Montageeinheit M beim Absenken eine Schräglage einnimmt. Wie insbesondere aus Fig. 6a ersichtlich ist, ist die Schräglage so gewählt, dass beim Absenken zunächst das erste Kuppelelement 5 in das an der Aufnahme A vorgesehene zweite Kuppelelement 12 eingreift. Anschließend wird durch Ausüben einer Zugspannung mittels des Seils S auf den unteren Befestigungspunkt B2 das dritte Kuppelelement in Eingriff mit dem an der Aufnahme A angebrachten vierten Kuppelelement 13 gebracht. Im eingekuppelten Zustand, welcher in Fig. 6d gezeigt ist, nimmt die Montageeinheit M eine im Wesentliche horizontale Position ein. In diesem Zustand ist das dritte Kuppelelement 6 mit dem vierten Kuppelelement 13 verrastet. Ein Auskuppeln der Montageeinheit M von der Aufnahme A erfolgt in umgekehrter Reihenfolge durch Bewegen des umlaufenden Seils S entgegen des Uhrzeigersinns um die erste Umlenkrolle 15.

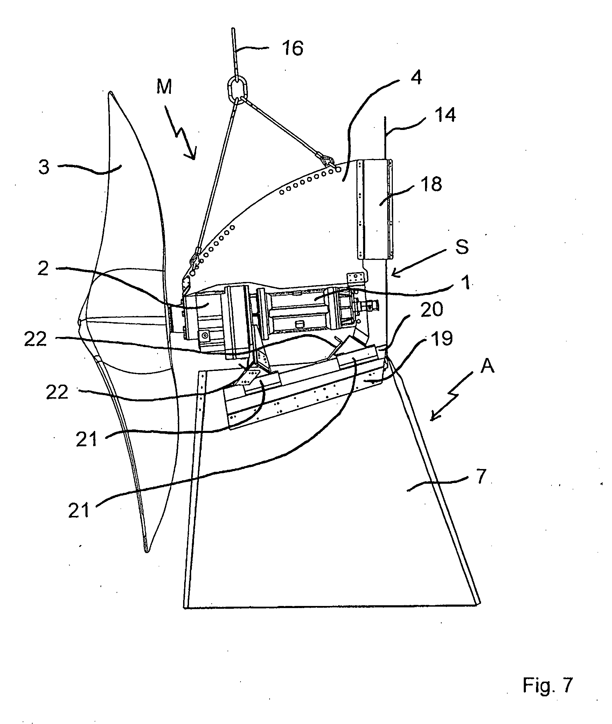

Bei dem in Fig. 7 gezeigten weiteren Horizontalrührwerk sind die zweiten Strömungsleitelemente 7 mittels eines einzigen dritten Verbindungselements 19 miteinander verbunden. Das dritte Verbindungselement 19 weist an seiner der Montageeinheit M zugewandten Oberseite eine Profilschiene 20 mit einem trapez- oder V-förmigen Profil (hier nicht gezeigt) auf.

An der Montageeinheit M sind zwei fünfte Kuppelelemente 21 angebracht, deren Profil zum Profil der Profilschiene 20 korrespondiert, derart, dass die fünften Kuppelelemente 21 im Wesentlichen formschlüssig auf die Profilschiene 20 aufsetzbar sind.

Mit dem Bezugszeichen 22 sind an der Profilschiene 20 angebrachte sechste Kuppelelemente bezeichnet. Das die Profilschiene 20 aufnehmende dritte Verbindungselement 19 ist in Richtung des Propellers 3 schräg nach unten geneigt an den zweiten Strömungsleitelementen 7 befestigt.

Beim Absenken wird das Montageelement M entlang des ersten Trums 14 mittels der zweiten Führung 18 so geführt, dass die fünften Kuppelelemente 21 auf die Profilschiene 20 aufsetzen. Wegen der Neigung der Profilschiene 20 sowie einer mit dem ersten Trum 14 erzeugbaren Zugspannung werden die fünften Kuppelelemente 21 in Anlage mit den sechsten Kuppelelementen 22 gezwungen. Das Horizontalrührwerk wird derart betrieben, dass mit dem Propeller 3 auf die Montageeinheit M stets eine Kraft ausgeübt wird, welche die fünften 21 und die sechsten Kuppelelemente 22 gegeneinander zwingt.

Das vorgeschlagene Horizontalrührwerk lässt sich mit geringem Aufwand herstellen. Es kann insbesondere auf das Vorsehen einer vertikalen Säule oder eines vertikalen Pfeilers zum Führen der Montageeinheit M verzichtet werden. Mit dem vorgeschlagenen Horizontalrührwerk kann in besonders effizienter Weise eine Horizontalströmung in einem Klärbecken erzeugt werden.

### Bezugszeichenliste

- 1: Tauchmotor
- 2: Getriebe
- 3: Propeller
- 4: erstes Strömungsleitelement
- 5: erstes Kuppelelement
- 6: drittes Kuppelelement
- 7: zweites Strömungsleitelement
- 8: erste Trägerplatte
- 9: zweite Trägerplatte
- 10: erstes Verbindungselement
- 11: zweites Verbindungselement
- 12: zweites Kuppelelement
- 13: viertes Kuppelelement
- 14: erstes Trum
- 15: erste Umlenkrolle
- 16: zweites Trum
- 17: erste Führung
- 18: zweite Führung
- 19: drittes Verbindungselement
- 20: Profilschiene
- 21: fünftes Kuppelelement
- 22: sechstes Kuppelelement

- A: Aufnahme
- B1: oberer Befestigungspunkt
- B2: unterer Befestigungspunkt
- Bo: Boden
- M: Montageeinheit
- N: Nenn-Abwasserniveau
- S: Seil

## Patentansprüche

1. Horizontalrührwerk zum Erzeugen einer Strömung in einem Klärbecken, wobei ein Tauchmotor (1) mit einem damit antriebsmäßig verbundenen Propeller (3) eine Montageeinheit (M) bildet,
wobei eine am Boden (Bo) des Klärbeckens abstützbare Aufnahme (A) zur lösbaren Befestigung der Montageeinheit (M) vorgesehen ist,
und wobei eine Führung zum Führen der Montageeinheit (M) entlang eines im Wesentlichen vertikalen Bewegungswegs zwischen einer Auftauch-Position oberhalb eines für das Klärbecken vorgegebenen maximalen Nenn-Abwasserniveaus (N) und der Aufnahme (A) vorgesehen ist,
**dadurch gekennzeichnet, dass**
die Führung durch zumindest ein zwischen der Auftauch-Position und der Aufnahme (A) verlaufendes gespanntes erstes Seil (S) gebildet ist.

2. Horizontalrührwerk nach Anspruch 1, wobei das erste Seil um eine an der Aufnahme vorgesehene erste Umlenkeinrichtung geführt und ein erstes Ende des ersten Seils (S) an der Montageeinheit (M) befestigt ist.

3. Horizontalrührwerk nach einem der vorhergehenden Ansprüche, wobei eine an der Montageeinheit (M) vorgesehene Führung (18) das erste Seil umgreift.

4. Horizontalrührwerk nach einem der vorhergehenden Ansprüche , wobei zum Bewegen der Montageeinheit (M) entlang des ersten Seils ein zweites Seil vorgesehen ist, dessen zweites Ende an der Montageeinheit befestigt ist.

5. Horizontalrührwerk nach einem der vorhergehenden Ansprüche, wobei das erste Ende des ersten Seils (S) an einem unteren Befestigungspunkt (B2) an der Montageeinheit (M) und das zweite Ende des zweiten Seils (S) an zumindest einem oberen Befestigungspunkt (B1) an der Montageeinheit (M) befestigt sind.

6. Horizontalrührwerk nach einem der vorhergehenden Ansprüche, wobei der obere Befestigungspunkt (B1) versetzt zu einem Schwerpunkt der Montageeinheit (M) angeordnet ist, so dass die am zumindest einen oberen Befestigungspunkt (B1) hängende Montageeinheit (M) eine Schräglage einnimmt, bei welcher eine Achse des Propellers (3) schräg bezüglich des Bodens (Bo) des Klärbeckens verläuft.

7. Horizontalrührwerk nach einem der vorhergehenden Ansprüche, wobei ein drittes Ende des ersten Seils auf einer oberhalb des maximalen Nenn-Abwasserniveaus vorgesehenen ersten Winde und ein viertes Ende des zweiten Seils auf einer oberhalb des maximalen Nenn-Abwasserniveaus vorgesehenen zweiten Winde aufgenommen ist.

8. Horizontalrührwerk nach einem der vorhergehenden Ansprüche, wobei das erste und das zweite Seil (S) zu einem umlaufenden Seil zusammengefasst sind, welches oberhalb der Auftauch-Position um eine zweite Umlenkeinrichtung (15), vorzugsweise eine dritte Winde, geführt ist.

9. Horizontalrührwerk nach einem der Ansprüche 7 oder 8, wobei die erste und die zweite Winde oder die zweite Umlenkeinrichtung an einer vorgesehenen Brücke oder einem im Bereich der Auftauch-Position angebrachten Gestell befestigt ist.

10. Horizontalrührwerk nach einem der vorhergehenden Ansprüche, wobei die Montageeinheit (M) eine erste Kupplungseinrichtung aufweist und wobei die Aufnahme (A) mit einer zur ersten Kupplungseinrichtung korrespondierenden zweiten Kupplungseinrichtung versehen ist, so dass die Montageeinheit (M) durch Zusammenwirken der ersten und der zweiten Kupplungseinrichtung lösbar an die Aufnahme (A) ankuppelbar ist.

11. Horizontalrührwerk nach einem der vorhergehenden Ansprüche, wobei die erste Kupplungseinrichtung ein erstes Kuppelelement (5, 21) aufweist, welches beim Einkuppeln in ein an der Aufnahme (A) vorgesehenes zweites Kuppelelement (12, 22) der zweiten Kuppeleinrichtung eingreift.

12. Horizontalrührwerk nach einem der vorhergehenden Ansprüche, wobei die erste Kupplungseinrichtung ein drittes Kuppelelement (6, 21) aufweist, welches beim Einkuppeln in ein an der Aufnahme (A) vorgesehenes viertes Kuppelelement (12, 22) der zweiten Kupplungseinrichtung eingreift, wobei eine Klemm- oder Rastverbindung hergestellt wird.

## Claims

1. A horizontal agitator for producing a flow in a clarifier, wherein a submersible motor (1) and a propeller (3) drivingly connected thereto form an assembly unit (M),
wherein a receiving portion (A) for removably attaching the assembly unit (M) is provided and can be supported on the bottom (Bo) of the clarifier,
and wherein a guide for guiding the assembly unit (M) along a substantially vertical movement path between a surfacing position above a maximum nominal sewage level (N) defined for the clarifier and the receiving portion (A) is provided,
**characterised in that**
the guide is formed by at least one taut first cable (S) extending between the surfacing position and the receiving portion (A).

2. The horizontal agitator according to Claim 1, wherein the first cable is guided about a first return arrangement provided on the receiving portion and a first end of the first cable (S) is attached to the assembly unit (M).

3. The horizontal agitator according to one of the preceding claims, wherein a guide (18) provided on the assembly unit (M) surrounds the first cable.

4. The horizontal agitator according to one of the preceding claims, wherein, in order to move the assembly unit (M) along the first cable, a second cable is provided, of which the second end is attached to the assembly unit.

5. The horizontal agitator according to one of the preceding claims, wherein the first end of the first cable (S) is attached at a lower attachment point (B2) on the assembly unit (M) and the second end of the second cable (S) is attached at least at one upper attachment point (B1) on the assembly unit (M).

6. The horizontal agitator according to one of the preceding claims, wherein the upper attachment point (B1) is offset in relation to a centre of gravity of the assembly unit (M), such that the assembly unit (M) suspended at least at one upper attachment point (B1) adopts a sloping position, in which an axis of the propeller (3) runs in a manner sloping with respect to the bottom (Bo) of the clarifier.

7. The horizontal agitator according to one of the preceding claims, wherein a third end of the first cable is received on a first winch provided above the maximum nominal sewage level and a fourth end of the second cable is received on a second winch provided above the maximum nominal sewage level.

8. The horizontal agitator according to one of the preceding claims, wherein the first and the second cable (S) are combined to form a circulating cable, which is guided above the surfacing position about a second return arrangement (15), preferably a third winch.

9. The horizontal agitator according to one of Claims 7 or 8, wherein the first and the second winch or the second return arrangement is attached to a provided bridge or a frame fitted in the region of the surfacing position.

10. The horizontal agitator according to one of the preceding claims, wherein the assembly unit (M) has a first coupling arrangement, and wherein the receiving portion (A) is provided with a second coupling arrangement corresponding to the first coupling arrangement, such that the assembly unit (M) can be releasably coupled to the receiving portion (A) by cooperation of the first and the second coupling arrangement.

11. The horizontal agitator according to one of the preceding claims, wherein the first coupling arrangement has a first coupling element (5, 21), which, during the coupling process, engages with a second coupling element (12, 22) of the second coupling arrangement, said coupling element being provided on the receiving portion (A).

12. The horizontal agitator according to one of the preceding claims, wherein the first coupling arrangement has a third coupling element (6, 21), which, during the coupling process, engages with a fourth coupling element (12, 22) of the second coupling arrangement, said fourth coupling element (12, 22) being provided on the receiving portion (A), wherein a clamped or latched connection is produced.

## Revendications

1. Agitateur horizontal pour produire un courant dans un bassin de décantation, en ce qu'un moteur submersible (1) forme avec une hélice (3) qui y est reliée du point de vue entraînement une unité de montage (M),
en ce qu'un support (A) susceptible de s'appuyer sur le fond (Bo) du bassin de décantation est prévu pour la fixation désolidarisable de l'unité de montage (M),
et en ce qu'un guidage pour guider l'unité de montage (M) suivant une course de déplacement essentiellement verticale entre une position d'émergence au-dessus d'un niveau d'eaux usées nominal (N) maximal prédéfini pour le bassin de décantation et le support (A),
**caractérisé en ce que**
le guidage est formé par au moins un premier câble (S) étant tendu entre la position d'émergence et le support (A).

2. Agitateur horizontal selon la revendication 1, en ce que le premier câble est guidé autour d'un premier dispositif de renvoi prévu sur le support et une première extrémité du premier câble (S) est fixée sur l'unité de montage (M).

3. Agitateur horizontal selon l'une des revendications précédentes, en ce qu'un guidage (18) prévu sur l'unité de montage (M) enserre le premier câble.

4. Agitateur horizontal selon l'une des revendications précédentes, en ce qu'un deuxième câble est prévu pour le déplacement de l'unité de montage (M) le long du premier câble, la deuxième extrémité du deuxième câble étant fixée sur l'unité de montage.

5. Agitateur horizontal selon l'une des revendications précédentes, en ce que la première extrémité du premier câble (S) est fixée sur un point de fixation inférieur (B2) sur l'unité de montage (M) et la deuxième extrémité du deuxième câble (S) est fixée sur au moins un point de fixation supérieur (B1) sur l'unité de montage (M).

6. Agitateur horizontal selon l'une des revendications précédentes, en ce que le point de fixation supérieur (B1) est disposé de manière décalée par rapport à un centre de gravité de l'unité de montage (M), de façon à ce que l'unité de montage (M) suspendue à au moins un point de fixation supérieur (B1) prenne une position inclinée suivant laquelle un axe de l'hélice (3) s'étend de manière inclinée par rapport au fond (Bo) du bassin de décantation.

7. Agitateur horizontal selon l'une des revendications précédentes, en ce qu'une troisième extrémité du premier câble est logée sur un premier treuil prévu au-dessus du niveau d'eaux usées nominal maximal et une quatrième extrémité du deuxième câble sur un deuxième treuil prévu au-dessus du niveau d'eaux usées nominal maximal.

8. Agitateur horizontal selon l'une des revendications précédentes, en ce que le premier et le deuxième câble (S) sont regroupés en un câble périphérique qui est guidé au-dessus de la position d'émergence autour d'un deuxième dispositif de renvoi (15), de préférence un troisième treuil.

9. Agitateur horizontal selon l'une des revendications 7 ou 8, en ce que le premier et le deuxième treuil ou le deuxième dispositif de renvoi est fixé sur un pont prévu ou sur un bâti monté dans la zone de la position d'émergence.

10. Agitateur horizontal selon l'une des revendications précédentes, en ce que l'unité de montage (M) présente un premier dispositif d'accouplement et en ce que le support (A) est doté d'un deuxième dispositif d'accouplement correspondant au premier dispositif d'accouplement, de façon à ce que l'unité de montage (M) soit susceptible d'être accouplée de manière désolidarisable au support (A) par concours du premier et du deuxième dispositif d'accouplement.

11. Agitateur horizontal selon l'une des revendications précédentes, en ce que le premier dispositif d'accouplement présente un premier élément d'accouplement (5, 21) qui lors de l'accouplement s'engage dans un deuxième élément d'accouplement (12, 22) du deuxième dispositif d'accouplement, ledit deuxième élément d'accouplement étant prévu sur le support (A).

12. Agitateur horizontal selon l'une des revendications précédentes, en ce que le premier dispositif d'accouplement présente un troisième élément d'accouplement (6, 21) qui lors de l'accouplement s'engage dans un quatrième élément d'accouplement (12, 22) du deuxième dispositif d'accouplement, ledit quatrième élément d'accouplement (12, 22) étant prévu sur le support (A), en ce qu'un raccordement par serrage ou raccordement à crans est réalisé.
